# EUROPEAN PATENT SPECIFICATION

(11) **EP 4 523 831 B1**
(45) Date of publication and mention of the grant of the patent: **03.06.2026**
(21) Application number: 23198023.6
(22) Date of filing: 18.09.2023
(51) Int. Cl.: B23K 26/03, B41M 5/26, G01N 21/63, A61J 1/05, B65B 21/04, G01N 21/31, G01N 21/90, G01N 21/33, G01N 21/84

(54) **IN-LINE SPECTROSCOPY FOR DISCRIMINATION OF HDPE GRADES**
IN-LINE-SPEKTROSKOPIE ZUR UNTERSCHEIDUNG VON HDPE-QUALITÄTEN
SPECTROSCOPIE EN LIGNE POUR LA DISCRIMINATION DE GRADES DE HDPE

(43) Date of publication of application: 19.03.2025
(73) Proprietor: B. Braun Melsungen AG, 34212 Melsungen (DE)
(72) Inventor: AZDOUDI, Samir, 08191 Rubí (ES); ELGSTROEM, Jorge, 08191 Rubí (ES)
(74) Representative: Maiwald GmbH

(56) References cited:
- WO-A1-2022/170262
- CN-A- 109 320 819
- US-A1- 2016 221 356
- US-A1- 2022 305 812

## Description

### FIELD OF THE INVENTION

The present invention relates to a method for laser marking of a polyethylene component using spectroscopic discrimination of at least two different quality grades of the polyethylene component, and a system for laser marking of a polyethylene component using spectroscopic discrimination of at least two different quality grades of the polyethylene component.

### BACKGROUND OF THE INVENTION

Especially in the field of devices for medical use, like receptacles, bottles or caps used for pharmaceutical products, there is a need to mark or inscribe the devices with labels or codes for identification. These inscriptions have to fulfil several requirements, which may be higher compared to inscription arranged on packaging material for food, for example. Thus, the provided codes or labels on the material have to be save and readable for months or years, although they may be exposed to disinfectants or sterilization procedures. In addition, the codes or labels must not contaminate the content of the devices for medical use. For these reasons, the use of ink for marking bottles or caps for medical use is at least problematic, as the marking may disappear during sterilization or the ink of a marking may diffuse into the bottle, thus contaminating its contents. Another possibility of marking medical devices may be engraving the material using lasers, for example. However, CO₂ lasers used commonly for engraving lead to a thermal reaction that may introduce holes in the packaging of the medical device. For these reasons, engraving may be only possible on breaking parts of the medical device, but not directly on a bottle or a cap. Another method for marking or labelling bottles or caps used in the pharmaceutical field may be laser making using lasers in the ultra-violet UV range that do not induce a thermal reaction in the material leading to an engraving, but locally change the color of the marked material at the surface due to a photo-chemical reaction. However, different materials may require different parameters of the marking laser like laser energy and exposure time in order to provide best marking results and readability of the label.

CN 109 320 819 A describes a preparation method of an organic-inorganic compound material capable of being marked by laser and application of the organic-inorganic compound material capable of being marked by the laser.

US 2022/305812 A1 describes a marking device for laser marking of a container that has a transparency, wherein a marking condition is adjusted according to a spectral characteristic of an object to be contained in the container.

US 2016/221356 A1 describes a method and system for applying markings on a food product by applying a radiant energy to the food product in such a manner to perform a permanent marking thereon.

WO 2022/170262 A1 describes systems and methods for classifying and sorting of plastic materials utilizing a vision system and one or more sensor systems.

The inventors of the present invention have thus found that it would be advantageous to have an improved method of laser marking and a laser marking system for medical devices like bottles or caps that takes into account different materials to be provided with codes or labels.

### SUMMARY OF THE INVENTION

It is an object of the present invention to provide an improved method of laser marking of polyethylene components that distinguishes between at least two different quality grades of the polyethylene component and selects appropriate parameters of the laser marking system.

The object of the present invention is solved by the subject matter of the independent claims, wherein further embodiments are incorporated in the dependent claims.

The described embodiments similarly pertain to the method for laser marking of a polyethylene component using spectroscopic discrimination of at least two different quality grades of the polyethylene component, and the system for laser marking of a polyethylene component using spectroscopic discrimination of at least two different quality grades of the polyethylene component. The embodiments described further may be combined in any possible way. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect of the invention, there is provided a method for laser marking of a polyethylene component using spectroscopic discrimination of at least two different quality grades of the polyethylene component. The method comprises the steps of providing a polyethylene component to be laser marked, illuminating the polyethylene component with light from a light source, and guiding at least a portion of the light that is transmitted through the polyethylene component to a detector and detecting the transmitted light with the detector. The method comprises further the steps of analyzing the transmitted light that is detected by the detector and determining a quality grade of the polyethylene component based on the transmitted light, selecting a set of laser parameters from a plurality of pre-defined sets of laser parameters based on the determined quality grade of the polyethylene component, and laser marking of the polyethylene component with a laser marking device using the selected set of laser parameters.

Thus, a method is provided that allows advantageously the laser marking of bottles or caps for medical use. A plurality of polyethylene component may be provided, which may be of different quality grades, or may be manufactured according to different production processes or by different manufactures. Although all of the plurality of polyethylene components may be of a similar or nearly identical material, i.e. polyethylene or high-density polyethylene HDPE, they may have slightly different properties due to their manufacturing process. For example, different reactors and/or different catalyst systems might lead to end products comprising different molecular distributions. Thus, one production process may lead to HDPE components comprising a broad molecular distribution, whereas another production process from a different supplier may lead to HDPE components comprising two narrow molecular distribution, for example. Although both HDPE components are high-density polyethylene, these differences in molecular properties of the two materials may require different laser settings for laser marking of the at least two different HDPE grades. While these differences in the material properties are not a problem for ink printing of the labels, laser marking of different grades of high-density polyethylene components requires specific laser settings. Optimized laser parameters also reduce cycle times by up to 40%, i.e., the laser marking process is faster. Thus, a solution for industrialization is needed.

Therefore, the inventors of the present invention propose a method for laser marking of a polyethylene component using spectroscopic discrimination of at least two different quality grades of the polyethylene component. A plurality of polyethylene component to be laser marked are provided and serially one other one another illuminated with light from a light source, the light that is transmitted through the polyethylene component is guided to a detector and detecting with the detector. Further, the transmitted light is spectroscopically analyzed and a quality grade of the polyethylene component is determined based on the spectra of the transmitted light. As the inventors of the present invention found out, different quality grades of the HDPE components show different absorbance and transmission spectra, especially in the UV range of about 350 nm wavelength. Thus, it is possible to discriminate at least two different HDPE quality grades based on the transmission or absorbance spectra. A set of laser parameters from a plurality of pre-defined sets of laser parameters can be selected based on the determined quality grade of the polyethylene component. The set of laser parameters can comprise, for example, exposure time, or intensity or power of a laser used for marking the polyethylene component. Thus, the polyethylene component can be marked with a laser marking device using the selected and optimized set of laser parameters. As the laser induces a photochemical reaction in the polyethylene material, the polyethylene components may have additives that enable the laser marking, which may be difficult in the natural material. In general, it proved to be not straight forward to find out optimized laser parameters that worked for the specific material provided. Therefore, an optical application which allows the discrimination of different qualities of HDPE caps in-line is proposed in order to replace current inkjet printing systems with a reliable laser marking system.

In an embodiment of the invention, the polyethylene component is a high-density polyethylene HDPE component. These materials are commonly used to manufacture bottles and caps used in the pharmaceutical field.

In an embodiment of the invention, the quality grade of the high-density polyethylene component is selected from at least two predefined quality grades that are representative of a manufacturer and/or a manufacturing process of the high-density polyethylene component. Thus, it is possible to distinguish caps out of a plurality of caps that are manufactured according to different manufacturing processes and/or by different manufacturers. These may be necessary if the plurality of caps is mixed up or if the caps is provided in an arbitrary order to the laser marking system.

In an embodiment of the invention, the polyethylene component is a cap of a receptacle for medical use. Alternatively, the polyethylene component can be the receptacle itself like a bottle or a container.

In an embodiment of the invention, the light source is a pulsed xenon lamp. However, any other light source that provides preferably broadband light can be used. Using a pulsed lamp may reduce measurement noise, whereas also continuously emitting light sources can be used. It is noted, that transmission of different HDPE grade mainly differs in the ultra-violet range of about 350 nm. Thus, any light source that emits light in this range can advantageously be used.

In an embodiment of the invention, the step of detecting the transmitted light with the detector comprises detecting a spectrum of the transmitted light, and the step of analyzing the transmitted light that is detected by the detector comprises analyzing the spectrum of the transmitted light. A spectroscopic module with a sensitivity preferably in the range of 340 nm to 800 nm can be used to analyze the light that is transmitted through the polyethylene component.

In an embodiment of the invention, the step of analyzing the spectrum of the transmitted light comprises using a classification algorithm to discriminate between at least two predefined quality grades of the polyethylene components. Thus, for example, the application of Linear Discriminant Analysis to establish a classification model to grade different HDPE qualities of the polyethylene component can be preferred. The spectra obtained can be processed and analyzed by classification algorithms based on Discrimination Analysis techniques to discriminate the two target HDPE quality grades that may be available.

In an embodiment of the invention, the method comprises further the step of collimating the light from the light source and focusing the light onto the polyethylene component, and/or collecting the transmitted light and focusing the transmitted light onto the detector. Thus, collimating the emitted light and collimating the transmitted light may increase the intensity of light reaching the detector and improve the quality of the measurement results.

In an embodiment of the invention, the method is performed in-line and/or automatically. Thus, as the method is performed on the fly in real time, it is possible to determine the quality grade of the polyethylene component shortly before laser marking the respective component. For example, a plurality of components like caps can be arranged in a row on a conveyor belt, which transports the caps serially through an analyzation stage and a laser marking stage, which uses the measurement results of the analyzation to adjust the laser marking stage to the optimized laser parameters.

In an embodiment of the invention, the method comprises further the steps of transmitting a signal representative of the determined quality grade of the polyethylene component to the laser marking device, and buffering the signal representative of the determined quality grade of the polyethylene component before and/or after transmitting the signal to the laser marking device. Preferably, a signal is transmitted to the laser marking device in order to transmit data necessary to select the specific laser parameters for marking the respective component. This signal representative of the determined quality grade of the polyethylene component may include at least a part of the measurement data of the transmitted light, and/or may include a digital signal used to distinguish between at least two predefined quality grades. For example, a spectroscopic module can preferably send a digital signal to a laser module to use a set of laser parameters from a plurality of pre-defined set of laser parameters based on the determined quality grade of the polyethylene component. Thus, the pre-defined set of laser parameters can be created and saved in the laser module, not in the spectroscopic module. Therefore, the spectroscopic module may have a plurality of pre-defined quality grades of the polyethylene component that can be linked to a set of laser parameters that are saved in laser module. However, alternatively, it may be also possible to send a set of laser parameters from the spectroscopic module to the laser module.

An interface with an external PLC device by means of digital I/O through the implementation of dedicated electronic hardware and software can be provided in order to acquire and process the spectral data and to communicate with external devices.

According to another aspect of the invention, there is provided a system for laser marking of a polyethylene component using spectroscopic discrimination of at least two different quality grades of the polyethylene component. The system comprises a light source configured for illuminating the polyethylene component with light, a detector configured for detecting light that is transmitted through the polyethylene component, and an analyzing module configured for analyzing the transmitted light that is detected by the detector. The system comprises further at least one processing unit configured for determining a quality grade of the polyethylene component based on the transmitted light, and for selecting a set of laser parameters from a plurality of pre-defined sets of laser parameters based on the determined quality grade of the polyethylene component, and a laser marking device configured for laser marking of the polyethylene component using the selected set of laser parameters.

It is noted that one processing unit can be provided that is configured for determining a quality grade of the polyethylene component based on the transmitted light and for selecting a set of laser parameters from a plurality of pre-defined sets of laser parameters based on the determined quality grade of the polyethylene component. However, also two processing units can be provided, where the first processing unit is configured for determining a quality grade of the polyethylene component based on the transmitted light, and the second processing unit is configured for selecting a set of laser parameters from a plurality of pre-defined sets of laser parameters based on the determined quality grade of the polyethylene component. In case of two processing units, the first processing unit can be part of the analyzing module, and the second processing unit can be part of the laser marking device. Thus, a digital signal representative of the determined quality grade can be transmitted from the analyzing module to the laser marking device. However, it may be also possible to transmit the set of laser parameters to the laser marking device.

In an embodiment of the invention, the light source is a pulsed xenon lamp.

In an embodiment of the invention, the detector and/or the analyzing module are configured for detecting and/or analyzing the transmitted light spectroscopically. Thus, the detector and/or the analyzing module can be part of a spectroscopic module for spectroscopically analyzing the transmitted light. Linear Discriminant Analysis can be applied to establish a classification model to grade the different HDPE qualities of the polyethylene component.

In an embodiment of the invention, the system further comprises a collimator configured for collimating the light from the light source and focusing the light onto the polyethylene component, and/or a collector configured for collecting the transmitted light and focusing the transmitted light onto the detector.

In an embodiment of the invention, the system further comprises a buffer configured for buffering a signal representative of the determined quality grade of the polyethylene component. This buffer may be necessary to compensate for a time delay between the determination of the quality grade of the polyethylene component and the laser marking of the respective polyethylene component, which may result from the arrangement of a plurality of polyethylene components in-line on a conveyor belt, for example.

Thus, the benefits provided by any of the above aspects equally apply to all of the other aspects and vice versa.

In summary, the invention relates to a method for laser marking of a polyethylene component using spectroscopic discrimination of at least two different quality grades of the polyethylene component. The method comprises the steps of providing a polyethylene component to be marked with a laser, illuminating the polyethylene component with light, guiding at least a portion of the transmitted light to a detector, analyzing the transmitted light that is detected by the detector and determining a quality grade of the polyethylene component based on the transmitted light, selecting a set of laser parameters from a plurality of pre-defined sets of laser parameters based on the determined quality grade of the polyethylene component, and laser marking of the polyethylene component with a laser marking device using the selected set of laser parameters.

One of the advantages of embodiments of the present invention of laser marking a polyethylene component using spectroscopic discrimination of at least two different quality grades of the polyethylene component may be that a reliable laser marking system to replace the current inkjet printing systems can be provided. Another advantage may reside in that at least two different quality grades of the polyethylene component can be detected and laser marked with optimized laser parameters. Another advantage may reside in that different qualities of HDPE caps can be discriminated in-line.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a method for laser marking of a polyethylene component using spectroscopic discrimination of at least two different quality grades of the polyethylene component according to an embodiment of the invention.
Fig. 2 shows pictures of codes inscribed to a polyethylene component by means of laser marking.
Fig. 3A shows a schematic setup of a light source irradiating a polyethylene component and a detector detecting the light transmitted through the polyethylene component.
Fig. 3B shows a spectroscopic measurement of light transmitted through a polyethylene component.
Fig. 4 shows a result of a discriminant analysis of determined quality grades of polyethylene components.
Fig. 5 shows a schematic setup of a system for laser marking of a polyethylene component using spectroscopic discrimination of at least two different quality grades of the polyethylene component.

### DETAILED DESCRIPTION OF EMBODIMENTS

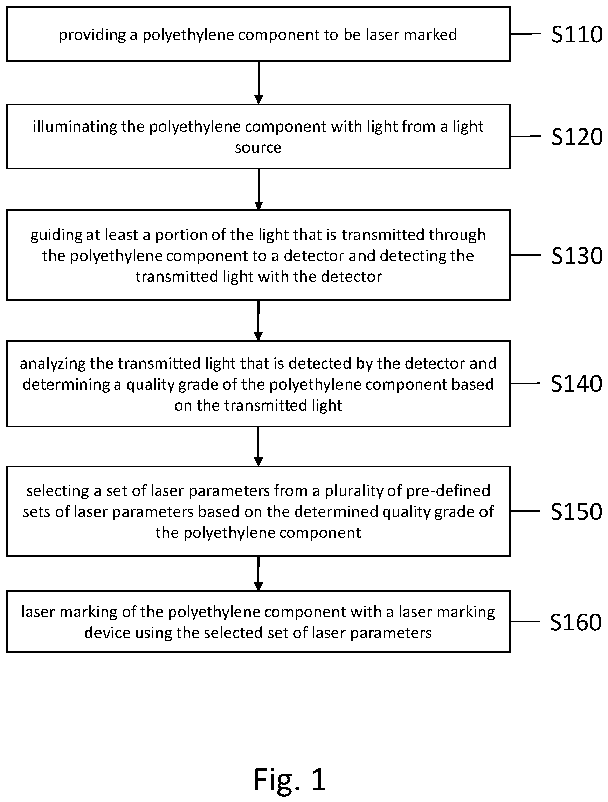

Fig. 1 shows a block diagram of a method for laser marking of a polyethylene component 110 using spectroscopic discrimination of at least two different quality grades of the polyethylene component 110 according to an embodiment of the invention. The method comprises the step S110 of providing a polyethylene component 110 to be laser marked, the step S120 of illuminating the polyethylene component 110 with light from a light source 120, and the step S130 of guiding at least a portion of the light that is transmitted through the polyethylene component 110 to a detector 130 and detecting the transmitted light with the detector. The method comprises further the step S140 of analyzing the transmitted light that is detected by the detector 130 and determining a quality grade of the polyethylene component 110 based on the transmitted light, the step S150 of selecting a set of laser parameters from a plurality of pre-defined sets of laser parameters based on the determined quality grade of the polyethylene component 110, and the step S160 of laser marking of the polyethylene component 110 with a laser marking device 140 using the selected set of laser parameters.

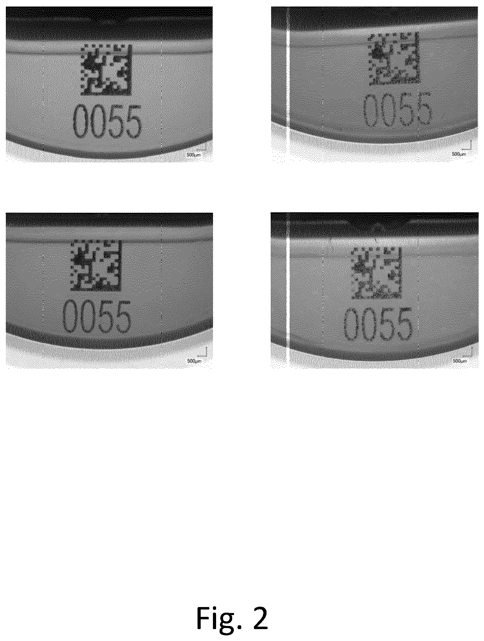

Fig. 2 shows pictures of codes inscribed to a polyethylene component 110 by means of laser marking. In the top row, the different quality grades of the polyethylene cap are laser marked with one set of laser parameters for both materials. However, the marking has shown to be not stable, is barely readable, and requires a high cycle time for marking. In the bottom row, an optimized set of laser parameters is used for each quality grade of the polyethylene cap. In this case, the marking has proven to be stable and readable, and requires a shorter cycle time that may be 40 percent shorter.

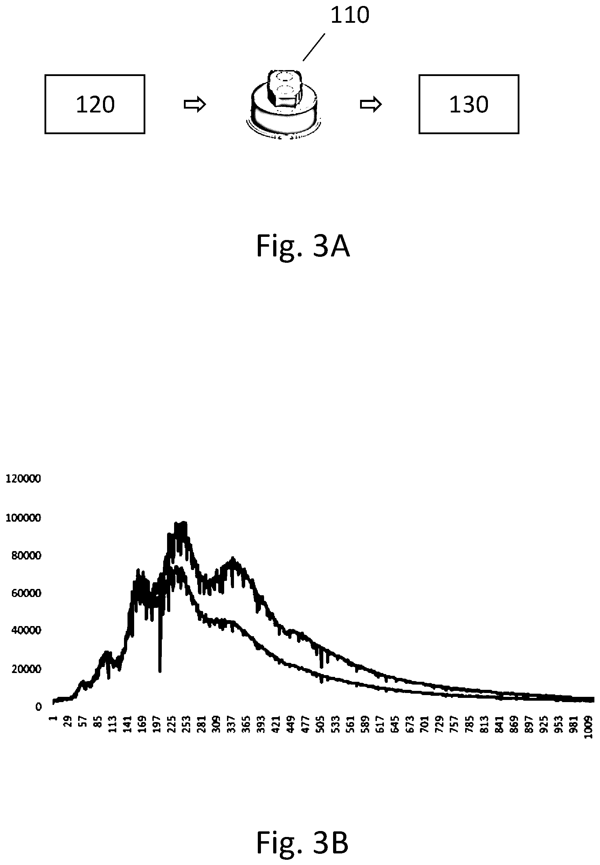

Fig. 3A shows a schematic setup of a light source 120 irradiating a polyethylene component 110 and a detector 130 detecting the light transmitted through the polyethylene component 110. The polyethylene component 110 may be a cap made of high-density polyethylene, and the light source 120 may be a pulsed Xenon lamp. The detector 130 can be integrated into an analyzing module 131, which can comprise at least one processing unit.

Fig. 3B shows a spectroscopic measurement of light transmitted through a polyethylene component 110. After irradiating the polyethylene component 110 with light from the light source 120, only a part of the light spectrum is transmitted through the polyethylene component 110. This part of the spectrum is detected with the detector 130, resulting in the spectrum shown in Fig. 3B. It is noted that the two spectra shown in this figure are acquired from two different quality grades of the polyethylene component 110, and differ from each other in particular in the ultra-violet region of about 350 nm. Thus, the at least two different quality grades of the polyethylene component can be distinguished by analyzing the transmitted light.

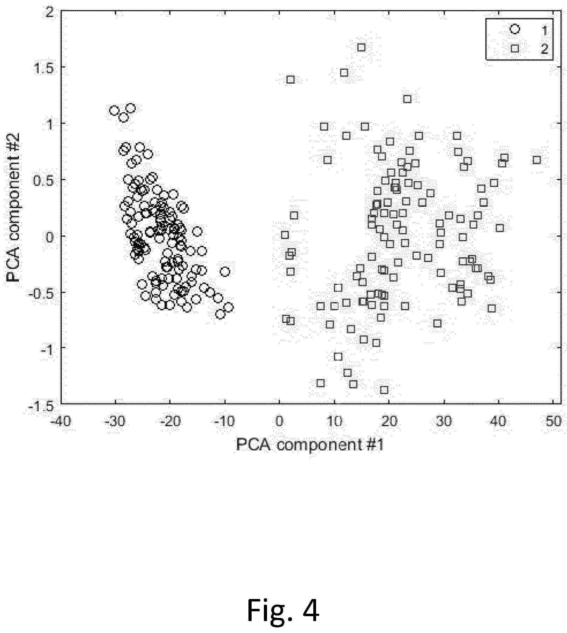

Fig. 4 shows a result of a discriminant analysis of determined quality grades of polyethylene components 110. In this principle component analysis, two main components are defined and drawn on the two axes. It is clearly visible that the two quality grades 1 and 2 are distinguishable from each other based on the position in this diagram.

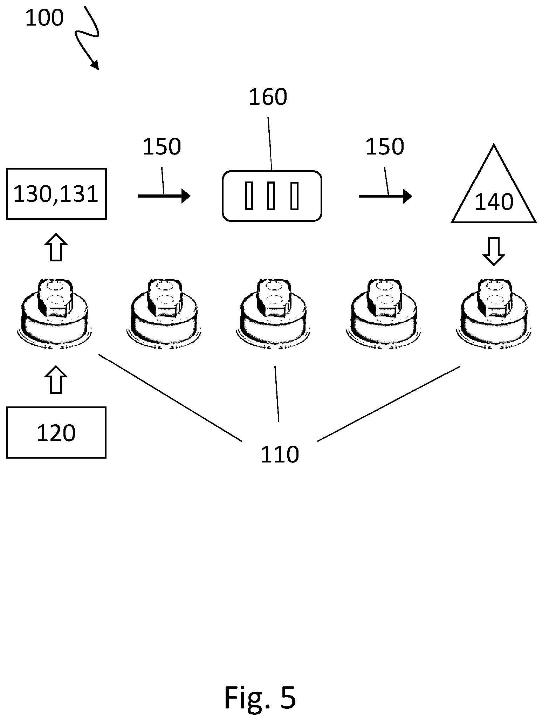

Fig. 5 shows a schematic setup of a system 100 for laser marking of a polyethylene component 110 using spectroscopic discrimination of at least two different quality grades of the polyethylene component 110. The system comprises a light source 120 for illuminating the polyethylene component 110 with light, and a detector 130 detecting light that is transmitted through the polyethylene component 110. An analyzing module 131 for analyzing the transmitted light can be integrally formed with the detector 130. At least one processing unit is provided that is configured for determining a quality grade of the polyethylene component 110 based on the transmitted light, and for selecting a set of laser parameters from a plurality of pre-defined sets of laser parameters based on the determined quality grade of the polyethylene component 110. One processing unit can be part of the analyzing module 131 and configured for determining a quality grade of the polyethylene component 110 based on the transmitted light, and one another processing unit can be part of the laser marking device 140 and configured for selecting a set of laser parameters from a plurality of pre-defined sets of laser parameters based on the determined quality grade of the polyethylene component 110. However, it is possible that both of these steps are performed in one single processing unit. A signal 150 representative of the determined quality grade of the polyethylene component 110 is transmitted from the analyzing module 131 to the laser marking device 140, optionally via a buffer 160 for buffering the transmitted signal. The laser marking device 140 is configured for laser marking of the polyethylene component 110 using the selected set of laser parameters.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing the claimed invention as defined by the independent claims, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: system
- 110: polyethylene component
- 120: light source
- 130: detector
- 131: analyzing module
- 140: laser marking device
- 150: signal
- 160: buffer

## Claims

1. A method for laser marking of a polyethylene component (110) using spectroscopic discrimination of at least two different quality grades of the polyethylene component, the method comprising the steps of:
providing (S110) a polyethylene component (110) to be laser marked;
illuminating (S120)the polyethylene component (110) with light from a light source (120);
guiding (S130) at least a portion of the light that is transmitted through the polyethylene component (110) to a detector (130) and detecting the transmitted light with the detector;
analyzing (S140) the transmitted light that is detected by the detector (130) and determining a quality grade of the polyethylene component (110) based on the transmitted light;
selecting (S150) a set of laser parameters from a plurality of pre-defined sets of laser parameters based on the determined quality grade of the polyethylene component (110); and
laser marking (S160) of the polyethylene component (110) with a laser marking device (140) using the selected set of laser parameters,
wherein detecting the transmitted light with the detector (130) comprises detecting a spectrum of the transmitted light, and
wherein analyzing the transmitted light that is detected by the detector (130) comprises analyzing the spectrum of the transmitted light.

2. The method according to claim 1, wherein the polyethylene component (110) is a high-density polyethylene **HDPE** component.

3. The method according to any of the preceding claims, wherein the polyethylene component (110) is a cap of a receptacle for medical use.

4. The method according to any of the preceding claims, wherein the light source (120) is a pulsed xenon lamp.

5. The method according to any of the preceding claims, wherein analyzing the spectrum of the transmitted light comprises using a classification algorithm to discriminate between at least two predefined quality grades of the polyethylene component (110).

6. The method according to any of the preceding claims, further comprising collimating the light from the light source (120) and focusing the light onto the polyethylene component (110), and/or collecting the transmitted light and focusing the transmitted light onto the detector (130).

7. The method according to any of the preceding claims, wherein the method is performed in-line and automatically.

8. The method according to any of the preceding claims, further comprising the steps of
transmitting a signal (150) representative of the determined quality grade of the polyethylene component (110) to the laser marking device (140); and
buffering the signal (150) representative of the determined quality grade of the polyethylene component (110) before and/or after transmitting the signal to the laser marking device (140).

9. A system (100) for laser marking of a polyethylene component using spectroscopic discrimination of at least two different quality grades of the polyethylene component (110), the system comprising:
a light source (120) configured for illuminating the polyethylene component (110) with light;
a detector (130) configured for detecting light that is transmitted through the polyethylene component (110);
an analyzing module (131) configured for analyzing the transmitted light that is detected by the detector (130);
at least one processing unit configured for determining a quality grade of the polyethylene component (110) based on the transmitted light, and for selecting a set of laser parameters from a plurality of pre-defined sets of laser parameters based on the determined quality grade of the polyethylene component (110); and
a laser marking device (140) configured for laser marking of the polyethylene component (110) using the selected set of laser parameters,
wherein the detector (130) and the analyzing module (131) are configured for detecting and analyzing the transmitted light spectroscopically, respectively.

10. The system (100) according to claim 9, wherein the light source (120) is a pulsed xenon lamp.

11. The system (100) according to any of claims 9 to 10, further comprising a collimator configured for collimating the light from the light source (120) and focusing the light onto the polyethylene component (110), and/or a collector configured for collecting the transmitted light and focusing the transmitted light onto the detector (130).

12. The system (100) according to any of claims 9 to 11, further comprising a buffer (160) configured for buffering a signal (150) representative of the determined quality grade of the polyethylene component (110).

## Patentansprüche

1. Ein Verfahren zur Lasermarkierung einer Polyethylenkomponente (110) unter Verwendung von spektroskopischer Unterscheidung von mindestens zwei verschiedenen Qualitätsklassen der Polyethylenkomponente, das Verfahren umfassend die Schritte:
Bereitstellen (S110) einer zu lasermarkierenden Polyethylenkomponente (110);
Bestrahlung (S120) der Polyethylenkomponente (110) mit Licht aus einer Lichtquelle (120);
Leiten (S130) mindestens eines Teils des Lichts, das durch die Polyethylenkomponente (110) transmittiert wird, zu einem Detektor (130) und Erfassen des transmittierten Lichts mit dem Detektor;
Analysieren (S140) des von dem Detektor (130) erfassten transmittierten Lichts und Ermitteln einer Qualitätsklasse der Polyethylenkomponente (110) auf der Grundlage des transmittierten Lichts;
Auswählen (S150) eines Satzes von Laserparametern aus einer Vielzahl von vordefinierten Sätzen von Laserparametern auf der Grundlage der ermittelten Qualitätsklasse der Polyethylenkomponente (110); und
Lasermarkieren (S160) der Polyethylenkomponente (110) mit einer Lasermarkierungsvorrichtung (140) unter Verwendung des ausgewählten Satzes von Laserparametern,
wobei das Erfassen des transmittierten Lichts mit dem Detektor (130) das Erfassen eines Spektrums des transmittierten Lichts umfasst, und
wobei das Analysieren des von dem Detektor (130) erfassten transmittierten Lichts das Analysieren des Spektrums des transmittierten Lichts umfasst.

2. Das Verfahren nach Anspruch 1, wobei die Polyethylenkomponente (110) eine High-Density-Polyethylen **HDPE** Komponente ist.

3. Das Verfahren nach einem der vorhergehenden Ansprüche, wobei die Polyethylenkomponente (110) ein Verschluss eines Behälters für medizinische Zwecke ist.

4. Das Verfahren nach einem der vorhergehenden Ansprüche, wobei die Lichtquelle (120) eine gepulste Xenonlampe ist.

5. Das Verfahren nach einem der vorhergehenden Ansprüche, wobei das Analysieren des Spektrums des transmittierten Lichts die Verwendung eines Klassifizierungsalgorithmus umfasst, um zwischen mindestens zwei vordefinierten Qualitätsklassen der Polyethylenkomponente (110) zu unterscheiden.

6. Das Verfahren nach einem der vorhergehenden Ansprüche, ferner umfassend Kollimieren des Lichts von der Lichtquelle (120) und Fokussieren des Lichts auf die Polyethylenkomponente (110), und/oder Sammeln des transmittierten Lichts und Fokussieren des transmittierten Lichts auf den Detektor (130).

7. Das Verfahren nach einem der vorhergehenden Ansprüche, wobei das Verfahren in Reihe und automatisch durchgeführt wird.

8. Das Verfahren nach einem der vorhergehenden Ansprüche, ferner umfassend die Schritte:
Übertragen eines Signals (150), das für die ermittelte Qualitätsklasse der Polyethylenkomponente (110) repräsentativ ist, an die Lasermarkierungsvorrichtung (140); und
Puffern des Signals (150), das für die ermittelte Qualitätsklasse der Polyethylenkomponente (110) repräsentativ ist, vor und/oder nach dem Übertragen des Signals an die Lasermarkierungsvorrichtung (140).

9. Ein System (100) zur Lasermarkierung einer Polyethylenkomponente unter Verwendung von spektroskopischer Unterscheidung von mindestens zwei verschiedenen Qualitätsklassen der Polyethylenkomponente (110), das System umfassend:
eine Lichtquelle (120), die konfiguriert ist, die Polyethylenkomponente (110) mit Licht zu beleuchten;
einen Detektor (130), der konfiguriert ist, Licht zu erfassen, das durch die Polyethylenkomponente (110) transmittiert wird;
ein Analysemodul (131), das konfiguriert ist, das von dem Detektor (130) erfasste transmittierte Licht zu analysieren;
mindestens eine Verarbeitungseinheit, die konfiguriert ist, auf der Grundlage des transmittierten Lichts eine Qualitätsklasse der Polyethylenkomponente (110) zu ermitteln, und auf der Grundlage der ermittelten Qualitätsklasse der Polyethylenkomponente (110) einen Satz von Laserparametern aus einer Vielzahl vordefinierter Sätzen von Laserparametern auszuwählen; und
eine Lasermarkierungsvorrichtung (140), die konfiguriert ist, die Polyethylenkomponente (110) unter Verwendung des ausgewählten Satzes von Laserparametern zu lasermarkieren,
wobei der Detektor (130) und das Analysemodul (131) konfiguriert sind, das transmittierte Licht spektroskopisch zu erfassen beziehungsweise zu analysieren.

10. Das System (100) nach Anspruch 9, wobei die Lichtquelle (120) eine gepulste Xenonlampe ist.

11. Das System (100) nach einem der Ansprüche 9 bis 10, ferner umfassend einen Kollimator, der konfiguriert ist, das Licht von der Lichtquelle (120) zu kollimieren und das Licht auf die Polyethylenkomponente (110) zu fokussieren, und/oder einen Kollektor, der konfiguriert ist, das transmittierte Licht zu sammeln und das transmittierte Licht auf den Detektor (130) zu fokussieren.

12. Das System (100) nach einem der Ansprüche 9 bis 11, ferner umfassend einen Puffer (160), der konfiguriert ist, ein Signal (150) zu puffern, das für die ermittelte Qualitätsklasse der Polyethylenkomponente (110) repräsentativ ist.

## Revendications

1. Procédé de marquage au laser d'un composant en polyéthylène (110) en utilisant la discrimination spectroscopique d'au moins deux nuances de qualité différentes du composant en polyéthylène, le procédé comprenant les étapes consistant à:
fournir (S110) un composant en polyéthylène (110) à marquer au laser ;
**caractérisé en ce que** le procédé comprend les étapes consistant à :
éclairer (S120) le composant en polyéthylène (110) avec la lumière provenant d'une source de lumière (120) ;
guider (S130) au moins une partie de la lumière qui est transmise à travers le composant en polyéthylène (110) vers un détecteur (130) et détecter la lumière transmise avec le détecteur ;
analyser (S140) la lumière transmise qui est détectée par le détecteur (130) et déterminer une nuance de qualité du composant en polyéthylène (110) sur la base de la lumière transmise ;
sélectionner (S150) un ensemble de paramètres laser parmi une pluralité d'ensembles prédéfinis de paramètres laser sur la base de la nuance de qualité déterminée du composant en polyéthylène (110) ; et
marquer au laser (S160) le composant en polyéthylène (110) avec un dispositif de marquage au laser (140) à l'aide de l'ensemble sélectionné de paramètres laser,
dans lequel la détection de la lumière transmise avec le détecteur (130) comprend la détection d'un spectre de la lumière transmise, et
dans lequel l'analyse de la lumière transmise qui est détectée par le détecteur (130) comprend l'analyse du spectre de la lumière transmise.

2. Procédé selon la revendication 1, dans lequel le composant en polyéthylène (110) est un composant en polyéthylène haute densité, HDPE.

3. Procédé selon l'une quelconque des revendications précédentes, dans lequel le composant en polyéthylène (110) est un capuchon d'un récipient à usage médical.

4. Procédé selon l'une quelconque des revendications précédentes, dans lequel la source de lumière (120) est une lampe au xénon pulsé.

5. Procédé selon l'une quelconque des revendications précédentes, dans lequel l'analyse du spectre de la lumière transmise comprend l'utilisation d'un algorithme de classification pour distinguer au moins deux nuances de qualité prédéfinies du composant en polyéthylène (110).

6. Procédé selon l'une quelconque des revendications précédentes, comprenant en outre la collimation de la lumière provenant de la source de lumière (120) et la focalisation de la lumière sur le composant en polyéthylène (110), et/ou la collecte de la lumière transmise et la focalisation de la lumière transmise sur le détecteur (130).

7. Procédé selon l'une quelconque des revendications précédentes, dans lequel le procédé est exécuté en ligne et de manière automatique.

8. Procédé selon l'une quelconque des revendications précédentes, comprenant en outre les étapes consistant à
transmettre un signal (150) représentatif de la nuance de qualité déterminée du composant en polyéthylène (110) au dispositif de marquage laser (140) ; et
mettre en mémoire tampon le signal (150) représentatif de la nuance de qualité déterminée du composant en polyéthylène (110) avant et/ou après la transmission du signal au dispositif de marquage au laser (140).

9. Système (100) pour le marquage au laser d'un composant en polyéthylène en utilisant la discrimination spectroscopique d'au moins deux nuances de qualité différentes du composant en polyéthylène (110), **caractérisé en ce que** le système comprend :
une source de lumière (120) configurée pour éclairer le composant en polyéthylène (110) avec de la lumière ;
un détecteur (130) configuré pour détecter la lumière qui est transmise à travers le composant en polyéthylène (110) ;
un module d'analyse (131) configuré pour analyser la lumière transmise qui est détectée par le détecteur (130) ;
au moins une unité de traitement configurée pour déterminer une nuance de qualité du composant en polyéthylène (110) sur la base de la lumière transmise, et pour sélectionner un ensemble de paramètres laser parmi une pluralité d'ensembles prédéfinis de paramètres laser sur la base de la nuance de qualité déterminée du composant en polyéthylène (110) ; et
un dispositif de marquage au laser (140) configuré pour le marquage au laser du composant en polyéthylène (110) à l'aide de l'ensemble sélectionné de paramètres laser,
dans lequel le détecteur (130) et le module d'analyse (131) sont configurés pour détecter et analyser la lumière transmise de manière spectroscopique, respectivement.

10. Système (100) selon la revendication 9, dans lequel la source de lumière (120) est une lampe au xénon pulsé.

11. Système (100) selon l'une quelconque des revendications 9 à 10, comprenant en outre un collimateur configuré pour collimater la lumière provenant de la source de lumière (120) et focaliser la lumière sur le composant en polyéthylène (110), et/ou un collecteur configuré pour collecter la lumière transmise et focaliser la lumière transmise sur le détecteur (130).

12. Système (100) selon l'une quelconque des revendications 9 à 11, comprenant en outre une mémoire tampon (160) configurée pour mettre en mémoire tampon un signal (150) représentatif de la nuance de qualité déterminée du composant en polyéthylène (110).
